(19) Europäisches Patentamt / European Patent Office / Office européen des brevets

(11) **EP 4 223 121 A1**

(12) **EUROPEAN PATENT APPLICATION**
published in accordance with Art. 153(4) EPC

(43) Date of publication:
**09.08.2023 Bulletin 2023/32**

(21) Application number: **21875328.3**

(22) Date of filing: **21.09.2021**

(51) International Patent Classification (IPC):
**A01N 25/34** (2006.01)    **A01N 25/00** (2006.01)
**A01N 57/20** (2006.01)    **A01P 13/00** (2006.01)

(52) Cooperative Patent Classification (CPC):
**A01N 25/00; A01N 25/34; A01N 57/20; A01P 13/00**

(86) International application number:
**PCT/JP2021/034598**

(87) International publication number:
**WO 2022/071026 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020  JP 2020165922**

(71) Applicant: **Nichiban Co.,Ltd.**
**Tokyo 112-8663 (JP)**

(72) Inventors:
• **OKADA Masaki**
  **Tokyo 112-8663 (JP)**
• **HATTORI Rie**
  **Tokyo 112-8663 (JP)**
• **KONO Kazuhiro**
  **Tokyo 112-8663 (JP)**

(74) Representative: **Gerauer, Marc Philippé**
**Kraus & Weisert**
**Patentanwälte PartGmbB**
**Thomas-Wimmer-Ring 15**
**80539 München (DE)**

(54) **AGROCHEMICAL TAPE**

(57) The agrochemical tape 10 according to the present invention sequentially includes a substrate 11 and an agrochemical-containing adhesive layer 12 that contains an agrochemical having permeation migratability. The substrate 11 is biodegradable and exhibits a mass residual percentage of not more than 50% in a biodegradability test.

[FIG. 1]

**Description**

Technical Field

The present disclosure relates to an agrochemical tape.

Background Art

At present, agrochemicals are safely processed in accordance with methods of use determined based on the types and targets of chemical agents. However, in many of the methods of use, agrochemicals are scattered over agricultural land in a uniform and simultaneous manner as typified by spraying in the air. While this application method has merits that the operation cost is low and an agrochemical can be uniformly distributed over agricultural land, it causes diffusion of the agrochemical (drift) at the time of application, which leads to inevitable exposure to workers and poses an issue of adverse effects on the neighborhood environment and ecosystem. In addition, while the application method enables uniform application of an agrochemical, the application method can be said to be ineffective in terms of the efficacy of the agrochemical because only part of the agrochemical applied to a target area adheres to its target and the rest does not adhere to the target and drops on the soil in the target area without exhibiting the effects.
On the other hand, some agrochemicals are applied in other methods such as tree trunk injection or coating. However, tree trunk injection requires drilling a hole in each target object before applying an agrochemical. This is not only laborious but may cause an adverse effect on the growth of the target. Coating of an agrochemical is more convenient than tree trunk injection, but the chemical liquid applied is just covering the surface of a trunk and the surface of the chemical liquid is not protected. Hence, the coating method does not eliminate the risk that the agrochemical leaks to the soil due to rain, wind and the like so that the agrochemical cannot exhibit the effects; or the concern about agrochemical drift to surrounding plants.
Accordingly, as a herbicidal method different from the methods above, Patent Literature 1 proposes a herbicidal tape in which picloram, i.e., an indoleacetic acid-like active herbicide, is mixed with lanolin and provided on the surface of a pressure sensitive adhesive layer of a gum sheet so as to be applied to a substrate.

Citation List

Patent Literature

[Patent Literature 1] JP 49-99725 U1 (1974)

Summary of the Disclosure

Technical Problem

However, since the herbicidal tape described in Patent Literature 1 contains a large amount of agrochemical per 1 $cm^2$ of the sheet, a large quantity of the agrochemical is necessary to cause a target plant to wither and die. In addition, the substrate of the sheet is made of a water repellent and impermeable material, which poses a problem that the sheet remains in soil if the sheet is left as it is after the plant died.
Prevention of the residue in the soil of the sheet substrate requires peeling work of the herbicidal tape from the dead plant. In the case of plants with high fertility such as Japanese kudzu (Pueraria lobata (Willd.) Ohwi subsp. lobata), the number of herbicidal tapes to be attached is enormous and the work for peeling off the tapes from the dead plants is extremely difficult.
Not only in the case of herbicides but also in production of agrochemical tapes containing agrochemicals such as insecticides and bactericides for application to plants, it is desirable that the agrochemical tapes after use be removed.
Thus, there is demand for an environmentally friendly agrochemical tape that does not require peeling work after use and of which residue in soil is minimized.
The present disclosure has been made in view of the above circumstances to provide an environmentally friendly agrochemical tape that is capable of efficiently administering an agrochemical to a target plant and does not require peeling work after use.

Solution to the Problem

The agrochemical tape of the present disclosure includes, in this order, a substrate and an agrochemical-containing pressure sensitive adhesive layer containing a systemic agrochemical. The substrate is biodegradable and has a mass residual rate of 50% or less in a biodegradability test.

The agrochemical tape of the present disclosure preferably has an agrochemical residual rate of the agrochemical of 30% or more in a water spray test.

Advantageous Effects of the Disclosure

The present disclosure provides an environmentally friendly agrochemical tape that is used by being attached to a plant and does not require peeling work after use.

Brief Description of Drawings

FIG. 1 is a cross section of an agrochemical tape according to an embodiment of the disclosure.
FIG. 2 is a graph showing the mass residual ratio of a substrate.

Description of Embodiments

Hereinafter, embodiments of the present disclosure will be described with reference to the drawings. The following embodiments are presented for illustrative purposes, and the present disclosure is not limited in any way to the embodiments set forth below.

[An embodiment]

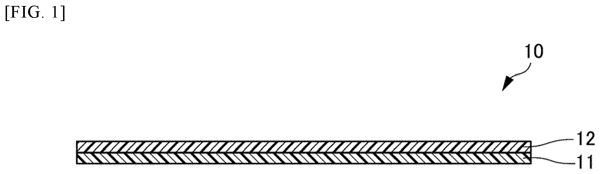

An embodiment of the present disclosure will be described with reference to FIG. 1.

As illustrated in FIG. 1, an agrochemical tape 10 according to an embodiment of the present disclosure includes, in this order, a substrate 11 and an agrochemical-containing pressure sensitive adhesive layer 12 that contains a systemic agrochemical. The mass residual rate of the substrate 11 is 50% or less in a biodegradability test.

Hereinafter, the substrate 11 and the agrochemical-containing pressure sensitive adhesive layer 12 will be described in detail.

(Substrate)

The substrate 11 of the present disclosure is biodegradable, and the mass residual rate of the substrate 11 is 50% or less in a biodegradability test. The smaller the mass residual rate, the higher the biodegradability and the more easily it will degrade in soil.

Here, the biodegradability test is a test in which the substrate 11 is buried in soil and left therein at 60°C for 60 days to determine the extent to which the substrate 11 has biodegraded.

Further, the mass residual ratio R (%) is a ratio (%) of the mass $W_1$ of the substrate 11 that remains after the biodegradability test with respect to the initial mass $W_0$ of the substrate 11, which is obtained from the following equation (1).

$$R\ (\%) = W_1/W_0 \times 100 \ \dots \ (1)$$

$W_0$: Initial mass (g) of a substrate before the start of a biodegradability test
W1: Mass (g) of the substrate after 60 days from the start of the biodegradability test

Since the agrochemical tape 10 of the present disclosure is used by being wound around a trunk or stem of a tree, the agrochemical tape 10 is desirably made of a material having flexibility or bendability. In addition, the substrate 11 preferably has an adhesion to a trunk or stem; waterproof property; and physical properties that prevent evaporation and leakage of a herbicide. From this viewpoint, the substrate 11 is preferably made of at least one selected from, for example, polylactic acid, polylactic acid/polycaprolactone copolymer, polylactic acid/polyether copolymer, poly(3-hydroxybutyrate-co-3-hydroxyhexanoate), polycaprolactone, polyglycolic acid, butanediol/long-chain dicarboxylic acid copolymer, polybutylene adipate/terephthalate copolymer, polytetramethylene adipate co-terephthalate, polyethylene terephthalate succinate, polyvinyl alcohol, starch polyester, cellophane, polybutylene succinate, and polybutylene succinate adipate. The substrate 11 may be a single layer or may be formed by laminating these materials.

The substrate 11 may have any thickness appropriately selected in view of physical properties such as elongation, tensile strength and workability as well as the conformability to a surface of a trunk or stem. The substrate 11 may preferably have a thickness of 5 μm or more and 200 μm or less, and more preferably 20 μm or more and 100 μm or less. If the substrate 11 has a thickness less than 5 μm, the strength and handleability of the agrochemical tape 10 deteriorate, so that it becomes difficult to attach the agrochemical tape 10 to a trunk or stem or the agrochemical tape 10 may break due to contact with the bark of a tree. If the substrate 11 has a thickness more than 200 μm, the agrochemical tape 10 becomes less conformable to a trunk or stem when wound around it and the tape 10 becomes easy to come off.

The substrate 11 may have any size appropriately selected based on the size of a target plant and the concentration of a herbicide.

At least one of the agrochemical-containing pressure sensitive adhesive layer 12 and the substrate 11 may be subjected to treatment such as sand blasting treatment or corona treatment.

The substrate 11 may contain, to an extent that does not inhibit the effects of the present agrochemical tape, antioxidants such as phenols and amines or ultraviolet absorbers such as benzophenones, hindered amine photostabilizers, and fillers such as calcium carbonate and silica. The substrate 11 may be subjected to treatments such as coloring; printing of letters and the like; and coating or vapor deposition of a release agent, a primer, a weather-resistant treatment agent and the like as appropriate.

Incidentally, in the case that the substrate 11 has a very small thickness, the substrate 11 may be provided with a carrier film on a surface opposite to the surface on which the agrochemical-containing pressure sensitive adhesive layer 12 is provided. The carrier film may be any known one but may preferably be formed using films made of thermoplastics such as polyurethane, polyethylene, polypropylene, ionomer, polyamide, polyvinyl chloride, polyvinylidene chloride, ethylene-vinyl acetate copolymer, thermoplastic polyester and polytetrafluoroethylene. Such films may be laminated on paper.

The carrier film formed of the films above and the like may desirably have a large thickness; or enough stretchability and durability. The carrier film may have any thickness appropriately set, but the thickness is usually 10 μm or more, and preferably 20 μm or more. The upper limit value of the thickness is about 500 μm.

(Agrochemical-containing pressure sensitive adhesive layer)

The agrochemical-containing pressure sensitive adhesive layer 12 may be a single layer or may be formed of multiple layers. When the agrochemical-containing pressure sensitive adhesive layer 12 is formed of multiple layers, it may be formed by laminating layers of different types of pressure sensitive adhesives. In addition, the multiple layers may contain agrochemicals different from each other. The agrochemical-containing pressure sensitive adhesive layer 12 may be formed on the entire surface on one side of the substrate 11 or may be partially formed on one side depending on the size of a plant on which it is applied, the size of the substrate 11 or the like.

-Pressure sensitive adhesive-

The pressure sensitive adhesive to form the agrochemical-containing pressure sensitive adhesive layer 12 may be selected without particular limitation. The pressure sensitive adhesive may be any known one such as acrylic-based pressure sensitive adhesives, rubber-based pressure sensitive adhesives, silicone-based pressure sensitive adhesives, vinyl alkyl ether-based pressure sensitive adhesives, polyester-based pressure sensitive adhesives, polyamide-based pressure sensitive adhesives, urethanebased pressure sensitive adhesives, fluorine-based pressure sensitive adhesives, epoxybased pressure sensitive adhesives, and other pressure sensitive adhesives containing synthetic resin. The agrochemical-containing pressure sensitive adhesive layer 12 may be formed in any method without particular limitation and may be formed using a known method for forming a pressure sensitive adhesive layer. The agrochemical-containing pressure sensitive adhesive layer 12 may be made using only one of the adhesives above or may be made using two or more adhesives mixed together. Among the adhesives above, acrylic-based pressure sensitive adhesives and rubber-based pressure sensitive adhesives are preferable from the viewpoint of adhesion to trunks and stems.

Examples of the acrylic-based pressure sensitive adhesives include adhesives that contain: homopolymers or copolymers of (meth)acrylic acid alkyl ester monomers such as butyl acrylate, 2-ethylhexyl acrylate and isononyl acrylate; or copolymers of said (meth)acrylic acid alkyl ester monomers and monomers copolymerizable with said (meth)acrylic acid alkyl ester monomers such as (meth)acrylic acid, (meth)acrylic acid hydroxyalkyl ester, vinyl acetate, styrene, vinylpyrrolidone, (meth)acrylamide and alkoxyalkyl(meth)acrylate. The acrylic-based pressure sensitive adhesives may contain a known appropriate cross-linking agent. Examples of the cross-linking agent include an isocyanate cross-linking agent, an epoxy cross-linking agent, an aziridine-based compound and a chelate-based cross-linking agent. These cross-linking agents may be contained in the acrylic-based pressure sensitive adhesives in any amount without particular limitation. The acrylic-based pressure sensitive adhesives may also contain a tackifier such as rosin, terpene resin, aliphatic hydrocarbon resin, alicyclic hydrocarbon resin, aromatic hydrocarbon resin, coumarone resin as well as copolymers, modified resins and hydrogenated resins thereof, as required.

The rubber-based pressure sensitive adhesives are prepared by mixing a rubber component and a tackifier. Examples of the rubber component include synthetic polyisoprene rubber, styrene-butadiene rubber, styrene isoprene block copolymer and hydrogenated rubber thereof, styrene-butadiene block copolymer and hydrogenated rubber thereof, polyisobutylene, butyl rubber, polybutene and natural rubber.

The agrochemical-containing pressure sensitive adhesive layer 12 may preferably have a thickness of 10 $\mu$m or more and 300 $\mu$m or less, and more preferably 15 $\mu$m or more and 150 $\mu$m or less.

-Agrochemical-

The agrochemical used in the agrochemical tape of the present disclosure is not particularly limited as long as it is systemic and acts on plants, diseases or pests. In view of the influence not only on target plants but also on the environment and other plants and animals, it is preferable to use chemical agents that are registered as agrochemicals.

According to Agricultural Chemicals Regulation Act in Japan, the term "agricultural chemicals (agrochemicals)" is defined to mean "bactericides, insecticides, herbicides and other chemicals to be used for controlling bacteria, nematodes, mites, insects, rats, weeds, or other animals or plants or viruses (hereinafter referred to collectively as "pests") that harm crops (including trees, and agricultural and forestry products; hereinafter referred to as "crops, etc.") (those bactericides, insecticides, herbicides and other chemicals include substances specified by Cabinet Order among those in which the bactericides, insecticides, herbicides and other chemicals are used as their materials or ingredients, and which are used for that control), and growth stimulants, germination inhibitors and other chemicals that are used for enhancing or inhibiting the physiology of crops, etc." Agricultural Chemicals Regulation Act also sets forth "Natural enemies used for the control of pests that harm crops, etc. are deemed to be agricultural chemicals."

Concrete examples of the "agricultural chemicals" include insecticides (chemical agents for controlling pests that harm crops), bactericides (chemical agents for controlling diseases that harm crops), insecticidal and bactericidal agents (chemical agents for simultaneously controlling pests and diseases of crops), herbicides (chemical agents for controlling weeds), rodenticides (chemical agents for controlling wild rats, etc. that harm crops), plant growth regulators (chemical agents for promoting or inhibiting the growth of crops), attractants (chemical agents for mainly attracting pests with odor, etc.), spreading agents (chemical agents used in admixture with an agrochemical to increase the adhesiveness of the agrochemical), natural enemies (natural enemies of pests that harm crops),and microbiological agents (agents that use microorganisms to control pests, diseases, etc. that harm crops). Among these, the present agrochemical tape may especially use systemic insecticides, bactericides, insecticidal and bactericidal agents, herbicides, and plant growth regulators.

The agrochemical may preferably be applied in an amount of 0.0001 mg/cm$^2$ or more and less than 9 mg/cm$^2$, and more preferably 0.015 mg/cm$^2$ or more and less than 3 mg/cm$^2$ per 1 cm$^2$ of the bark considering the effects on plants.

The agrochemical tape 10 of the present embodiment can be obtained by adding a herbicide to a pressure sensitive adhesive component to form the agrochemical-containing pressure sensitive adhesive layer 12 and a resin composition containing additives, and applying this mixture on the substrate 11.

The agrochemical-containing pressure sensitive adhesive layer 12 may optionally contain additives that may generally be formulated in pressure sensitive adhesive layers such as a liquid rubber, a cross-linking agent, a softener (a plasticizer), a pH adjuster, an oxidation inhibitor (an antioxidant, an antiseptic agent), a filler, an ultraviolet absorber, a photostabilizer and a colorant.

In order to promote the stability of the chemical agent and the permeability of the chemical agent when attached to a target, the agrochemical-containing pressure sensitive adhesive layer 12 used in the present embodiment may contain additives such as a surfactant (cationic, anionic, nonionic, amphoteric, silicone-based, etc.), fatty acid ester, glycerin fatty acid ester and polyethylene glycol.

The agrochemical may preferably be contained in the agrochemical-containing pressure sensitive adhesive layer 12 of the agrochemical tape 10 at a concentration of 0.01% by mass or more and 30% by mass or less, more preferably 0.1% by mass or more and 25% by mass or less, and still more preferably 1% by mass or more and 20% by mass or less, relative to 100% by mass of the pressure sensitive adhesive composition.

Further, the agrochemical-containing pressure sensitive adhesive layer 12 may preferably be applied in an amount of 10 g/m$^2$ or more and 300 g/m$^2$ or less, and more preferably 15 g/m$^2$ or more and 150 g/m$^2$ or less in view of the transferability of the agrochemical to a trunk or stem.

Furthermore, the substrate 11 and the agrochemical-containing pressure sensitive adhesive layer12 preferably have a total thickness of 15 $\mu$m or more and 500 $\mu$m or less, and more preferably 25 $\mu$m or more and 250 $\mu$m or less, in view of the conformability to a trunk or stem.

-Agrochemical residual rate-

The agrochemical tape 10 of the present disclosure preferably has an agrochemical residual ratio P (%) of the agrochemical of 30% or more in a water spray test. The higher the agrochemical residual rate P (%), the less the leakage of the agrochemical due to rain or the like when actually applied to a plant. The agrochemical can exhibit effects only on a target plant more effectively.

Here, the water spray test is a test in which the agrochemical tape 10 is attached to a panel, and 0.72 L of water per minute is sprayed on the agrochemical tape 10 from above at the constant rate for 8 hours to measure how much agrochemical has flowed out.

The agrochemical residual rate P (%) is a ratio of the amount of the chemical agent that remains in the agrochemical tape 10 after the water spray test $M_1$ with respect to the initial amount of the chemical agent contained in the agrochemical tape 10 $M_0$, which is obtained from the following formula (2).

$$P\ (\%) = M_1/M_0 \times 100 \ \dots \ (2)$$

$M_0$: Initial amount of chemical agent contained
$M_1$: Amount of chemical agent contained after water spray test

[Other configurations]

(Release liner)

The agrochemical tape 10 of the present disclosure may include a release liner attached on the surface of the agrochemical-containing pressure sensitive adhesive layer 12. Examples of the release liner to be attached include plastic films made of polyethylene terephthalate (PET), polybutylene terephthalate, polyethylene naphthalate, cast polypropylene, oriented polypropylene, polyethylene, polyurethane, polyvinyl chloride and polystyrene; processed sheets obtained by applying release treatment on the plastic films above; paper; laminated sheets formed by laminating paper with plastic films made of polyethylene, polypropylene and the like and processed sheets obtained by applying release treatment on these plastic films; and laminated films or sheets formed by laminating the films or sheets mentioned above on each other. These may be colorless or colored.

The thickness of the release liner is not particularly limited. The release liner may preferably have a thickness of 10 μm or more and 500 μm or less, more preferably 20 μm or more and 300 μm or less, and still more preferably 40 μm or more and 200 μm or less.

In addition, the agrochemical tape 10 of the present disclosure may be sealed in a bag from the viewpoint of the storage stability of a product.

[How to use the agricultural tape]

The agrochemical tape 10 according to an embodiment of the present disclosure is used by being attached around a stem or trunk of a plant or tree in a manner that the agrochemical-containing pressure sensitive adhesive layer 12 containing an agrochemical closely adheres thereto and left as it is for a desired number of days until the tape 10 exhibits the effects.

The agrochemical tape 10 may be attached at any position on a stem or trunk of a plant which is appropriately selected without particular limitation.

Since the substrate 11 of the agrochemical tape 10 of the present disclosure is biodegradable and the mass residual rate thereof is 50% or less in the biodegradability test, there is no need to collect the agrochemical tape 10 after the effects of the agrochemical on the target plant have worn off. Therefore, it can be said that the agrochemical tape 10 of the present disclosure is environmentally friendly.

Since the agrochemical tape of the present disclosure can be used only by attaching the adhesive tape that is provided with an agrochemical to a trunk or stem, it is possible to save labor and time for diluting and spraying the agrochemical. Further, the agrochemical can exhibit the effects only on a target plant without affecting useful plants. In addition, since the agrochemical tape of the present disclosure works efficiently in a small amount compared with an agrochemical solution having a concentration similar to those of conventional spraying methods, it is possible to reduce contamination of soil, drift to the surroundings, and exposure to workers.

Particularly, in the attempt to add an agrochemical to a pressure sensitive adhesive layer to provide the pressure sensitive adhesive layer with both the adhesive function and the efficacy of the agrochemical, there are some cases where it is not possible to add a herbicide in a desired amount to a pressure sensitive adhesive layer due to the compatibility between the agrochemical and the materials of the pressure sensitive adhesive layer. Still, due to recent advances in agrochemicals, agrochemicals can exhibit effects even in a small amount, thereby reducing contamination of soil, drift to the surroundings and exposure to workers.

[Examples]

[Biodegradability of substrate]

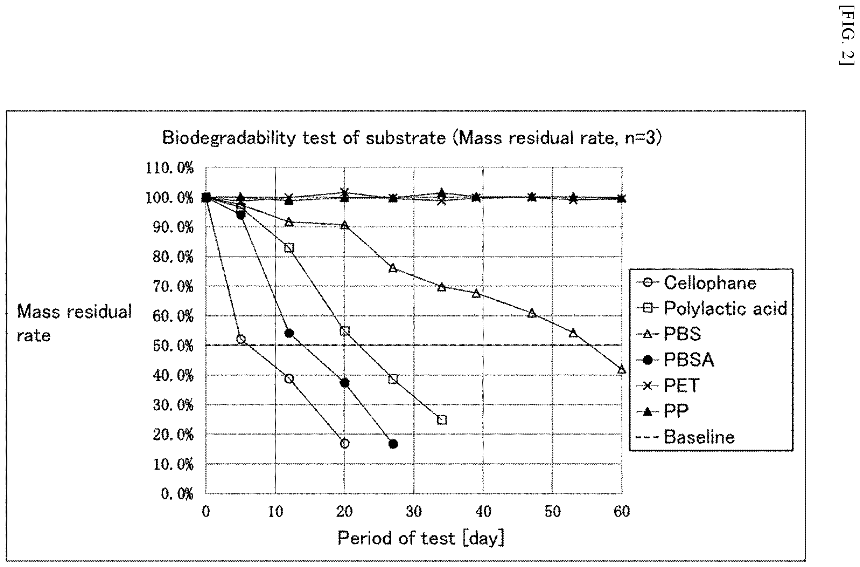

The following substrates were prepared and subjected to the biodegradability test described above to determine the mass residual ratio thereof. The results are given in FIG. 2.

(1) Cellophane
(2) PBSA (polybutylene succinate adipate)
(3) Polylactic acid
(4) PBS (polybutylene succinate)
(5) PET (polyethylene terephthalate)
(6) PP (polypropylene)

As shown in FIG. 2, (1) cellophane, (2) PBSA, (3) polylactic acid and (4) PBS each have a mass residual ratio of 50 (%) or less after 60 days. It can be said that they are biodegradable and suitable for the agrochemical tape.
On the other hand, (5) PET and (6) PP are not biodegradable, and it can be said that they are unsuitable for the agrochemical tape.
Incidentally, (1) cellophane, (2) PBSA and (3) polylactic acid degraded in 34 days or less without waiting for 60 days.

[Example 1]

(Preparation of agrochemical tape)

An agrochemical tape was prepared by forming an agrochemical-containing pressure sensitive adhesive layer containing a herbicide on a substrate. This agrochemical tape was wound around a target plant on agricultural land and left for a predetermined number of days.
Constituent materials of the agrochemical tape 10 are as follows. The concentration and amount of the herbicide and the amount of application are shown in Table 1 together with the test results.

(1) Substrate: polylactic acid (thickness: 23 μm)
(2) Agrochemical-containing pressure sensitive adhesive layer: acrylic emulsion pressure sensitive adhesive (acrylic acid ester/BA-based)
(3) Target plant: Japanese kudzu
(4) Herbicide: glyphosate potassium salt ([EPSP] synthase activity inhibitor)

[Example 2]

An agrochemical tape was prepared in the same manner as in Example 1, except that cellophane (thickness: 35 μm) was used as the substrate.

[Comparative example 1]

An agrochemical tape was prepared in the same manner as in Example 1, except that PET (polyethylene terephthalate, thickness: 38 μm) was used as the substrate.

[Comparative example 2]

An agrochemical tape was prepared in the same manner as in Example 1, except that a PP (polypropylene)-based nonwoven fabric (thickness: 72μm) was used as the substrate.

[Evaluation]

Examples and Comparative Examples were evaluated as follows. Evaluation results are given in Table 1.

(Mass residual rate of substrate)

The substrates (size: $3 \times 3$ cm) used in Examples and Comparative examples were subjected to the biodegradability test, and the mass residual ratio of each substrate was obtained from the formula (1) above. Polylactic acid of Example 1 and cellophane of Example 2 degraded in 34 days or less without waiting for 60 days. Therefore, these substrates were each collected in a period in which its mass was measurable to obtain the mass residual rate. In practice, after 60 days, the mass residual rates of Examples 1 and 2 are approximately zero.

(Agrochemical residual rate)

The agrochemical tape was sprayed with water at the rate of 0.72 liter per minute for 8 hours to obtain the agrochemical residual rate from Equation (2) above.
The agrochemical tapes of Examples and Comparative examples were wound and attached on Japanese kudzu. The conditions of the plants and the conditions of sprouts and remaining leaves were observed after 49 days. During the test, a large amount of water was poured over the target plants under the assumption of rain.

(Condition of plants)

The condition of each plant was evaluated in accordance with the following criteria. The term "withered and died" refers to a state in which stems of Japanese kudzu lost water and became ligneous, and the term "not withered and died" refers to a state in which stems still contain water.

A: Withered and died
B: Not withered and died

(Condition of sprouts)

The presence or absence of sprouts was confirmed in an area of 60 centimeters from the position of the attached agrochemical tape toward ends of vines of the target plant, and evaluation was made in accordance with the following criteria.

A: There are no sprouts.
B: There is a sign of sprouting.
C: One or more sprouts (leaves) have come out.

(Condition of remaining leaves)

The condition of the leaves of the target plant was observed and evaluated in accordance with the following criteria.

A: No remaining leaves
B: 80% or more of the leaves of the whole plant are discolored.
C: 50% or more and less than 80% of the whole plant is discolored.
D: Less than 50% of the whole plant is discolored.

[Table 1]

| Item | Example 1 | Example 2 | Comparative example 1 | Comparative example 2 |
|---|---|---|---|---|
| Substrate | Polylactic acid | Cellophane | PET | PP-based nonwoven fabric |
| Thickness of substrate | 23 $\mu$m | 35 $\mu$m | 38 $\mu$m | 72 $\mu$m |
| Pressure sensitive adhesive | Acrylic emulsion (BA based) | | | |
| Application amount of pressure sensitive adhesive | 30 g/m$^2$ | | | |

(continued)

| Item | | Example 1 | Example 2 | Comparative example 1 | Comparative example 2 |
|---|---|---|---|---|---|
| Kind of agrochemical | | Glyphosate potassium salt (herbicide) | | | |
| Concentration of agrochemical | | 5 wt% | | | |
| Mass residual rate of substrate | | 25% or less | 17% or less | 100% | 100% |
| Residual rate of chemical agent after water spray test | | 100% | 36% | 100% | -2% |
| Effects of agrochemical | Condition of plants | Withered and died | Withered and died | Withered and died | Not withered and died |
| | Condition of sprouts | A | A | A | C |
| | Condition of remaining leaves | A | A | A | C |

As shown in Table 1, since the present disclosure uses substrates having a very low mass residual ratio, it can be seen that the agrochemical tape after use degrades in soil and is environmentally friendly. Hence, it is unnecessary to collect the agrochemical tapes after plants have withered and died, reducing the burden on workers. Further, since the agrochemical tape of the present disclosure is applied by being attached to a plant and does not require spraying of an agrochemical, there is no fear that the drift of the agrochemical causes useful plants to wither and die.

Description of Symbols

10: agrochemical tape
11: substrate
12: agrochemical-containing pressure sensitive adhesive layer

## Claims

1. An agrochemical tape, comprising in this order:

   a substrate; and
   an agrochemical-containing pressure sensitive adhesive layer containing a systemic agrochemical,
   wherein the substrate is biodegradable and has a mass residual rate of 50% or less in a biodegradability test.

2. An agrochemical tape, comprising:

   a substrate;
   a pressure sensitive adhesive layer; and
   an agrochemical holding layer that contains a systemic agrochemical,
   wherein the substrate is biodegradable and has a mass residual rate of 50% or less in a biodegradability test.

3. The agrochemical tape according to claim 1 or 2, wherein an agrochemical residual rate of the agrochemical is 30% or more in a water spray test.

[FIG. 1]

[FIG. 2]

## INTERNATIONAL SEARCH REPORT

| International application No. |
| --- |
| **PCT/JP2021/034598** |

**A.   CLASSIFICATION OF SUBJECT MATTER**

*A01N 25/34*(2006.01)i; *A01N 25/00*(2006.01)i; *A01N 57/20*(2006.01)i; *A01P 13/00*(2006.01)i
FI:   A01N25/34 A; A01N25/00 101; A01N57/20 G; A01P13/00

According to International Patent Classification (IPC) or to both national classification and IPC

**B.   FIELDS SEARCHED**

Minimum documentation searched (classification system followed by classification symbols)

A01N25/34; A01N25/00; A01N57/20; A01P13/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| X | JP 10-29902 A (YAMAMOTO, Tadakatsu) 03 February 1998 (1998-02-03) claims, paragraphs [0014], [0008], [0011]-[0013], [0016], [0009], drawings, etc. | 2-3 |
| Y | | 1-3 |
| Y | JP 2008-222554 A (FURUKAWA ELECTRIC CO., LTD.) 25 September 2008 (2008-09-25) claims, paragraphs [0026], examples, etc. | 1-3 |
| Y | JP 9-266729 A (TSUTSUNAKA PLASTIC IND. CO., LTD.) 14 October 1997 (1997-10-14) claims, paragraph [0010], examples, etc. | 1-3 |
| Y | JP 2012-152197 A (ACHILLES CORP.) 16 August 2012 (2012-08-16) claims, paragraph [0021], examples, etc. | 1-3 |
| Y | JP 58-99402 A (ITO, Susumu) 13 June 1983 (1983-06-13) claims, drawings | 1, 3 |
| Y | Microfilm of the specification and drawings annexed to the request of Japanese Utility Model Application No. 71480/1983 (Laid-open No. 178301/1984) (KUDO, Yoshinori) 29 November 1984 (1984-11-29) claims, drawings | 1, 3 |

☑ Further documents are listed in the continuation of Box C.      ☑ See patent family annex.

| | |
| --- | --- |
| \*    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **11 November 2021** | **30 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2021/034598** |

### C.    DOCUMENTS CONSIDERED TO BE RELEVANT

| Category* | Citation of document, with indication, where appropriate, of the relevant passages | Relevant to claim No. |
| --- | --- | --- |
| Y | JP 63-51301 A (HISAMITSU PHARMACEUTICAL CO., INC.) 04 March 1988 (1988-03-04) claims, examples, etc. | 1-3 |
| Y | Microfilm of the specification and drawings annexed to the request of Japanese Utility Model Application No. 147866/1972 (Laid-open No. 99726/1974) (HODOGAYA CHEMICAL CO., LTD.) 28 August 1974 (1974-08-28) claims, page 3, drawings | 1-3 |
| Y | Microfilm of the specification and drawings annexed to the request of Japanese Utility Model Application No. 038337/1972 (Laid-open No. 000066/1974) (KUREHA CHEMICAL IND. CO., LTD.) 05 January 1974 (1974-01-05) claims, etc. | 1-3 |
| Y | JP 63-33301 A (CELAMERCK GMBH & CO. KG) 13 February 1988 (1988-02-13) claims, page 4, lower left column to page 5, upper left column | 1-3 |
| A | JP 2017-137261 A (GOYO PAPER WORKING CO., LTD.) 10 August 2017 (2017-08-10) claims, examples, etc. | 1-3 |
| A | WO 2013/094443 A1 (NITTO DENKO CORP.) 27 June 2013 (2013-06-27) claims, examples, etc. | 1-3 |
| A | JP 6-116103 A (NITTO DENKO CORP.) 26 April 1994 (1994-04-26) claims, examples, etc. | 1-3 |
| P, X | JP 2020-164515 A (NICHIBAN KK) 08 October 2020 (2020-10-08) claims, examples, fig. 1, 2, etc. | 1-3 |
| E, X | JP 2021-165240 A (NICHIBAN KK) 14 October 2021 (2021-10-14) claims, examples, drawings, etc. | 1, 3 |
| E, X | WO 2021/206021 A1 (NICHIBAN KK) 14 October 2021 (2021-10-14) claims, examples, drawings, paragraph [0018], etc. | 1, 3 |

Form PCT/ISA/210 (second sheet) (January 2015)

**INTERNATIONAL SEARCH REPORT**
Information on patent family members

International application No.

**PCT/JP2021/034598**

| Patent document cited in search report | | | Publication date (day/month/year) | Patent family member(s) | | | Publication date (day/month/year) |
|---|---|---|---|---|---|---|---|
| JP | 10-29902 | A | 03 February 1998 | (Family: none) | | | |
| JP | 2008-222554 | A | 25 September 2008 | (Family: none) | | | |
| JP | 9-266729 | A | 14 October 1997 | (Family: none) | | | |
| JP | 2012-152197 | A | 16 August 2012 | (Family: none) | | | |
| JP | 58-99402 | A | 13 June 1983 | (Family: none) | | | |
| JP | 59-178301 | U1 | 29 November 1984 | (Family: none) | | | |
| JP | 63-51301 | A | 04 March 1988 | (Family: none) | | | |
| JP | 49-99726 | U1 | 28 August 1974 | (Family: none) | | | |
| JP | 49-000066 | U1 | 05 January 1974 | (Family: none) | | | |
| JP | 63-33301 | A | 13 February 1988 | US | 5343653 | A | |
| | | | | claims, columns 4, 5 | | | |
| | | | | US | 5201925 | A | |
| | | | | EP | 254196 | A1 | |
| JP | 2017-137261 | A | 10 August 2017 | (Family: none) | | | |
| WO | 2013/094443 | A1 | 27 June 2013 | JP | 2013-129725 | A | |
| JP | 6-116103 | A | 26 April 1994 | (Family: none) | | | |
| JP | 2020-164515 | A | 08 October 2020 | (Family: none) | | | |
| JP | 2021-165240 | A | 14 October 2021 | (Family: none) | | | |
| WO | 2021/206021 | A1 | 14 October 2021 | (Family: none) | | | |

Form PCT/ISA/210 (patent family annex) (January 2015)

**EP 4 223 121 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 49099725 U